# FASCICULE DE BREVET EUROPEEN

(11) **EP 2 904 220 B1**
(45) Date de publication et mention de la délivrance du brevet: **30.09.2020**
(21) Numéro de dépôt: 13756420.9
(22) Date de dépôt: 27.08.2013
(51) Int. Cl.: F01K 1/04, F01K 3/12, F22B 1/02, F22B 1/00, F01K 1/20

(54) **SYSTEME DE STOCKAGE THERMIQUE DE VAPEUR**
DAMPFWÄRMESPEICHERSYSTEM
STEAM HEAT STORAGE SYSTEM

(30) Priorité: 29.08.2012 FR 1258070
(43) Date de publication de la demande: 12.08.2015
(73) Titulaire: Commissariat à l'Énergie Atomique et aux Énergies Alternatives, 75015 Paris (FR)
(72) Inventeur: OLCESE, Marco, F-73100 Tresserve (FR)
(74) Mandataire: Brevalex
(86) Numéro de dépôt international: PCT/EP2013/067736
(87) Numéro de publication internationale: WO 2014/033132

(56) Documents cités:
- DE-A1- 4 121 460
- DE-A1-102007 025 978
- JP-A- S60 159 377
- US-A- 4 192 144
- US-A1- 2008 276 616

## Description

### DOMAINE TECHNIQUE ET ART ANTÉRIEUR

La présente invention se rapporte à un système de stockage thermique de vapeur et notamment à une centrale solaire à génération directe de vapeur comportant au moins un tel système de stockage.

La technologie solaire thermique à concentration consiste à utiliser le rayonnement solaire pour chauffer un fluide servant directement ou indirectement de source chaude dans un cycle thermodynamique. La concentration permet d'atteindre des températures plus ou moins élevées et ainsi de bénéficier de rendements de conversion thermodynamiques plus ou moins importants.

Afin de rendre très intéressante l'exploitation des centrales solaires thermodynamiques à concentration pour production de puissance électrique, il est requis de disposés de systèmes de stockage thermique à haute température destinés à stocker l'énergie thermique excédentaire et de la rendre disponible par exemple lors d'une baisse de l'ensoleillement.

Par conséquent, on cherche à réaliser des systèmes de stockage thermique aptes à :
- maintenir une production constante d'énergie électrique pendant les passages nuageux en minimisant le nombre d'arrêts et démarrages de la turbine,
- faire fonctionner la turbine à un régime optimal pour une durée de temps plus élevée,
- réduire la capacité du système de transformation de la puissance, en dimensionnant la turbine pour une puissance nominale inférieure à celle de crête,
- permettre de découpler partiellement la production d'électricité de la ressource énergétique.

Le déploiement des centrales solaires cylindro-paraboliques à l'huile a permis la mise au point de systèmes de stockage thermique centralisés par sels fondus.

Il s'agit des systèmes de stockage indirect par chaleur sensible relativement simples où l'énergie excédentaire sortant du champ solaire est transférée à un mélange de sels fondus et stocké dans un réservoir « chaud ».

Dans un deuxième temps, l'énergie est restituée à l'huile par le refroidissement des sels qui sont ensuite envoyés vers un réservoir « froid ».

Ces systèmes comportent un circuit primaire à l'huile soumis directement au flux solaire concentré et un circuit secondaire dans lequel circule l'eau. Des échangeurs thermiques sont prévus entre le circuit primaire et le circuit secondaire. Ces échangeurs provoquent des pertes de rendement et augmentent le coût de la centrale solaire.

Pour améliorer la performance et donc réduire le coût de production de l'électricité, des systèmes à génération directe de vapeur ont été développés.

Pour cela, le champ solaire produit directement de la vapeur d'eau pour la boucle thermique, permettant en même temps d'éliminer les pertes de rendement liées aux échangeurs entre le circuit primaire et le circuit secondaire et de produire directement de la vapeur surchauffée à des températures supérieures à celles de la technologie à l'huile. La vapeur est utilisée directement dans la ou les turbines. La vapeur en excès est quant à elle stockée dans un système de stockage.

Dans le cas d'une centrale solaire à génération directe de vapeur, le système de stockage thermique comporte trois étages en série pour des questions d'efficacité: un étage à basse température, un étage à chaleur latente contenant un matériau à changement de phase et un étage à haute température afin de suivre au plus près la courbe d'évaporation de l'eau.

Dans la phase de stockage, la vapeur d'eau entre d'abord dans l'étage haute température où elle est désurchauffée avant de rentrer dans l'étage de chaleur latente où elle est condensée et l'énergie est stockée dans des matériaux à changement de phase, et ensuite le condensat formé à travers le module à chaleur latente traverse l'étage à basse température qui voit encore sa température baissée. Enfin le condensat sous-refroidi en sortant de l'étage à basse température est réinjecté dans le circuit de retour vers le champ solaire.

Dans la phase de déstockage, l'eau sous forme liquide sortant de la turbine est envoyée dans l'étage basse température où elle est réchauffée par la chaleur stockée, puis traverse le module à chaleur latente dans lequel elle est évaporée puis traverse l'étage haute température dans lequel l'eau vapeur est surchauffée. Enfin elle est envoyée dans la turbine pour générer de l'électricité.

Le document D.Laing. (2011). Thermal Energy Storage for Direct Steam Generation. Solar Energy - 85, 627-633 décrit un système de stockage thermique à génération directe de vapeur. Le stockage thermique dans l'étage à basse température est réalisé par stockage direct dans du béton. Or il a été constaté que celui-ci posait des problèmes de fiabilité et offrait un rendement faible. Le document DE4121460 A1 décrit un système avec deux modules de stockage thermique sous forme de chaleur latente. Le document US4192144 A décrit un système avec un module de stockage thermique sous forme de chaleur sensible.

En outre, les systèmes de stockage thermique à génération directe de vapeur de l'état de la technique sont complexes par rapport aux systèmes de stockage de centrales à l'huile. Pour cette raison, leur coût estimé pour des grandes centrales est plus élevé que celui des centrales à huile.

### EXPOSÉ DE L'INVENTION

C'est par conséquent un but de la présente invention d'offrir un système de stockage thermique de vapeur plus simple que ceux de l'état de la technique, offrant une fiabilité de fonctionnement améliorée et un rendement augmenté.

Le but précédemment énoncé est atteint par un système de stockage thermique de vapeur comportant un premier réservoir de stockage d'énergie thermique par chaleur latente et un deuxième réservoir de stockage d'énergie thermique à déplacement de liquide, le réservoir de stockage d'énergie thermique à déplacement de liquide comportant une zone supérieure remplie de vapeur et une zone inférieure remplie de liquide, le premier et le deuxième réservoir étant connectés de sorte qu'en phase de charge, la vapeur pénétrant dans le premier réservoir après condensation alimente le deuxième réservoir en liquide chaud dans sa partie inférieure remplie de liquide, et qu'en phase de décharge, la partie inférieure remplie de liquide du deuxième réservoir alimente le premier réservoir en liquide chaud, et de sorte que le mélange liquide et vapeur produit par le premier réservoir traverse le deuxième réservoir avant son évacuation pour son utilisation. Le deuxième réservoir comporte, quant à lui, une connexion dans sa partie inférieure pour permettre une évacuation de liquide froid en phase de charge du système et une alimentation de liquide froid en phase de décharge du système de stockage.

Dans l'application à une centrale solaire, le circuit de stockage thermique, comportant le système ci-dessus, peut comporter aussi, mais pas nécessairement un module haute température connectés en série, la vapeur produite par le champ solaire traversant le module haute température pour être refroidie avant de pénétrer dans le système de stockage thermique, et la vapeur produite par le système de stockage lors de son déchargement traverse le module haute température pour être surchauffée avant d'être transférée à la turbine destinée par exemple à produire de l'électricité.

En d'autres termes, dans l'application à une centrale solaire, on remplace l'étage à basse température et le module à chaleur latente par un système à deux réservoirs interconnectés, l'un des stockage de chaleur latente et l'autre de stockage direct par déplacement de liquide, dans lequel la vapeur produite par le réservoir à chaleur latente circule dans le réservoir à déplacement de liquide avant d'être envoyé à l'étage haute température ou alors directement vers le circuit d'utilisation de la vapeur si la centrale ne comporte pas d'étage à haute température.

Ce mode de stockage présente une efficacité élevée.

L'association d'un réservoir de stockage à chaleur latente et d'un réservoir à déplacement de liquide présente l'avantage d'offrir une compensation instantanée des transitoires de relativement longue durée du cycle principale, i.e. du cycle de production de vapeur par exemple par le champ solaire, notamment des transitoires rapides de puissance d'ensoleillement à la suite de passages nuageux. En effet, dés que la quantité de vapeur produite par un champ solaire diminue et est inférieure à celle requise pour le fonctionnement optimal de la turbine, la quantité de vapeur requise est déstockée par le système de stockage thermique. Grâce à l'invention, la présence d'un volume important de liquide chaud dans le réservoir à déplacement de liquide permet de maintenir une production de vapeur sur un intervalle de temps relativement long et sans variation importante de la pression de fonctionnement, alors que dans les systèmes de stockage thermique des centrales solaires de l'état de la technique, une production de vapeur sur un intervalle de temps relativement long n'est possible que si elle est accompagnée par des chutes de pression de l'ordre de 10 à 20 Bar.

Dans un exemple de réalisation très avantageux, la connexion entre le circuit primaire ou le module à haute température lorsque celui-ci est présent et le module de stockage à chaleur latente est réalisée à travers la partie supérieure du réservoir à déplacement liquide au niveau du ciel de vapeur. Cet exemple de réalisation présente l'avantage d'être de réalisation plus simple car elle réduit le nombre de connexions, le coût de fabrication est donc réduit. En même temps elle permet un équilibre de pression entre les deux réservoirs qui est un avantage ultérieur pour une compensation plus efficace des chutes de pression du circuit primaire.

La présente invention a alors pour objet un système de stockage thermique de vapeur comportant un module de stockage thermique sous forme de chaleur latente et un module de stockage thermique à déplacement de liquide, le module de stockage thermique à déplacement de liquide comportant un réservoir destiné à contenir un volume de liquide et de la vapeur dans sa partie supérieure, ledit système comportant des premiers moyens pour transférer du liquide entre une zone supérieure du volume de liquide et le module de stockage thermique sous forme de chaleur latente, des deuxièmes moyens pour transférer du liquide entre une zone inférieure du volume de liquide et un premier circuit extérieur, des troisièmes moyens pour transférer de la vapeur ou un mélange liquide-vapeur entre la partie supérieure du réservoir du module de stockage thermique à déplacement de liquide et le module de stockage thermique sous forme de chaleur latente, et des quatrièmes moyens, pour assurer le transfert de vapeur entre le système et un deuxième circuit extérieur.

Dans un exemple de réalisation, les quatrièmes moyens pour assurer le transfert de vapeur ente ledit système et un circuit extérieur sont formés par une connexion débouchant uniquement dans la partie supérieure du module de stockage thermique à déplacement de liquide.

Dans un autre exemple de réalisation, les quatrièmes moyens pour assurer le transfert de vapeur entre le système et un circuit extérieur sont formés par une connexion d'alimentation en vapeur débouchant dans le module de stockage thermique sous forme de chaleur latente et une connexion d'évacuation de la vapeur prélevant la vapeur dans la partie supérieure du module de stockage thermique à déplacement de liquide. Les troisièmes moyens de transfert peuvent comporter une première vanne de commande pour interrompre la communication entre lesdits modules.

Le module de stockage thermique sous forme de chaleur latente comporte par exemple au moins un matériau à changement de phase et des moyens d'échange thermique entre ledit matériau et le fluide traversant le module de stockage thermique sous forme de chaleur latente. En variante, le module de stockage thermique sous forme de chaleur latente peut comporter au moins un matériau à transition d'état solide/solide et des moyens d'échange thermique entre ledit matériau et le fluide traversant le module de stockage thermique sous forme de chaleur latente.

De manière avantageuse, le module de stockage thermique sous forme de chaleur latente comporte un premier réservoir contenant ledit matériau à changement de phase et/ou ledit matériau à transition d'état solide/solide, un deuxième réservoir distinct du premier réservoir pour l'écoulement du fluide et les moyens d'échange thermique entre le premier et le deuxième réservoir.

Les premiers moyens de transfert peuvent comporter une pompe hydraulique pour transférer le liquide du module de stockage thermique sous forme de chaleur latente vers le module de stockage thermique à déplacement de liquide.

De préférence, la hauteur du réservoir du module de stockage thermique sous forme de chaleur latente est inférieure ou égale à celle du réservoir du module de stockage thermique à déplacement de liquide.

Le système peut comporter avantageusement une membrane flottante séparant une zone de liquide à une première température d'une zone de liquide à une deuxième température, la première température étant supérieure à la deuxième température.

Les premiers moyens de transfert peuvent comporter préférentiellement un distributeur pour injecter ou prélever le liquide dans le module de stockage thermique à déplacement de liquide de sorte à réduire les turbulences dans le volume de liquide.

La présente invention a également pour objet une centrale solaire à génération directe de vapeur comportant un circuit principal comprenant un champ solaire de production de vapeur et une zone d'utilisation de la vapeur connectés en série et un circuit secondaire connecté au champ solaire de sorte à être alimenté par le champ solaire avec au moins une fraction du débit de vapeur et à alimenter le champ solaire en liquide, ledit circuit secondaire comportant un système de stockage selon l'invention, les troisièmes moyens de transfert étant connectés avec l'entrée du champ solaire et avec la sortie de la zone d'utilisation de la vapeur et les quatrièmes moyens connectant le système de stockage thermique avec la sortie du champ solaire.

Dans un exemple de réalisation, la centrale solaire comporte une deuxième vanne de commande entre la sortie du champ solaire et le module de stockage thermique sous forme de chaleur latente, lorsque la première vanne de commande est dans un état d'ouverture ou de fermeture, la deuxième vanne est dans un état de fermeture ou d'ouverture respectivement.

La centrale solaire peut comporter un module de stockage thermique à haute température sous forme de chaleur sensible disposé entre la sortie du champ solaire et le système de stockage.

La zone d'utilisation de la vapeur est par exemple une zone de production d'électricité.

Les troisièmes moyens de transfert peuvent comporter une pompe hydraulique pour transférer le liquide du module de stockage à déplacement de liquide vers le champ solaire à une pression donnée.

Avantageusement, le module de stockage thermique haute température et le système de stockage thermique se chargent en énergie thermique tant que la pression de vapeur produite par le champ solaire est supérieure ou égale à une valeur de pression donnée et dans laquelle le système de stockage thermique produit de la vapeur automatiquement dés que la pression de vapeur produite par le champ solaire est inférieure ou égale à une valeur donnée. La pression donnée est par exemple la pression nominale de fonctionnement d'une turbine de la zone d'utilisation de la vapeur.

### BRÈVE DESCRIPTION DES DESSINS

La présente invention sera mieux comprise à l'aide de la description qui va suivre et des dessins en annexes sur lesquels :
- la figure 1 est une représentation schématique d'une centrale solaire à génération directe de vapeur comportant un système de stockage thermique de vapeur selon un exemple de réalisation dans une configuration de stockage,
- la figure 2 est une représentation schématique de la centrale solaire de la figure 1 dans une configuration de déstockage de l'énergie thermique stockée dans le système de stockage thermique,
- la figure 3 est une représentation graphique de l'évolution du débit total de vapeur provenant du système de stockage des figures 1 et 2,
- la figure 4 est une représentation graphique de l'évolution de la pression du système de stockage des figures 1 et 2 pendant une journée,
- la figure 5 est une représentation schématique d'une centrale solaire comportant un système de stockage thermique à génération directe de vapeur selon un autre exemple de réalisation,
- la figure 6 est une représentation schématique de l'intérieur d'un réservoir à déplacement de liquide selon un exemple de réalisation, particulièrement adapté à une mise en œuvre dans les systèmes de stockage des figures 1, 2 et 5.

### EXPOSÉ DÉTAILLÉ DE MODES DE RÉALISATION PARTICULIERS

Dans la description qui va suivre, le système de stockage thermique de vapeur va être décrit dans une application à une centrale solaire à génération directe de vapeur pour laquelle il est particulièrement adapté. Mais le système de stockage peut être utilisé pour stocker et déstocker de l'énergie thermique dans tout type d'installation requérant le stockage et le déstockage de vapeur.

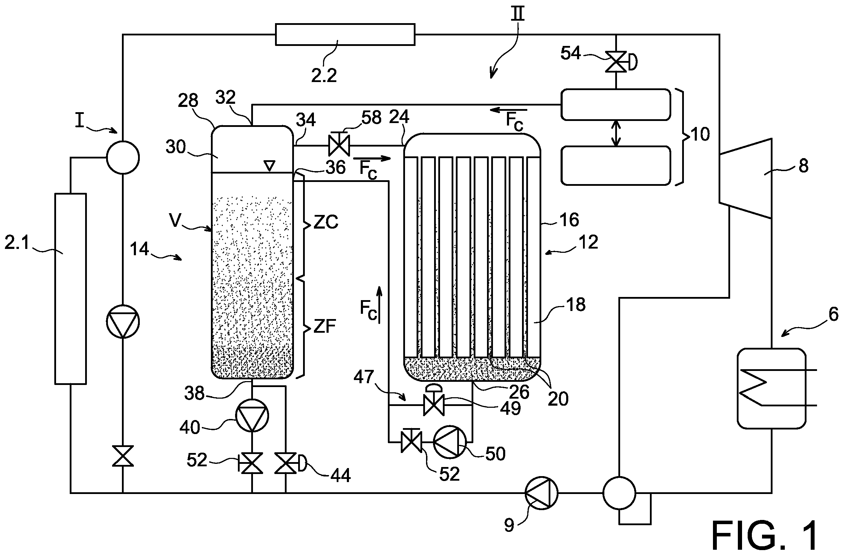

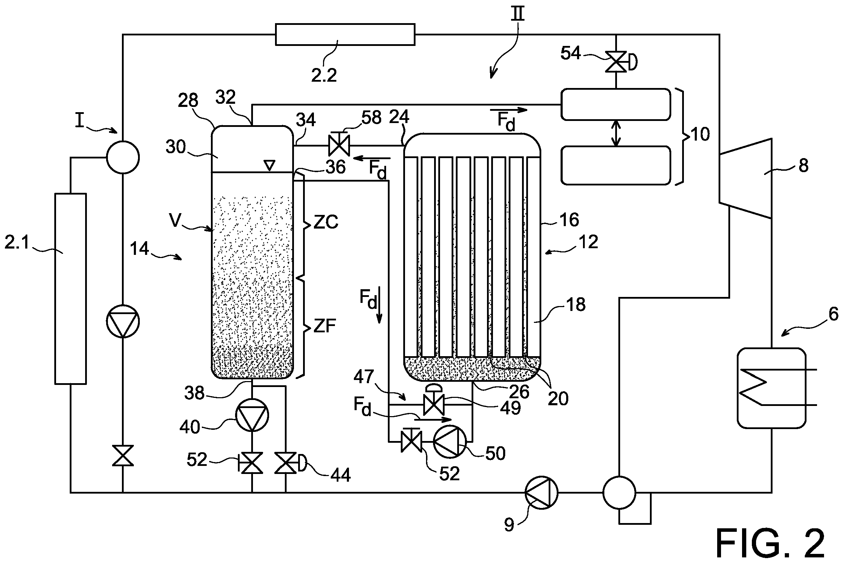

Sur les figures 1 et 2, on peut voir un exemple de représentation schématique d'une centrale solaire à génération directe de vapeur S1 comportant un système de stockage thermique ST1 selon un exemple de réalisation. Dans la suite de la description, ce dernier sera désigné "système de stockage" à des fins de simplicité.

Dans l'exemple, la centrale solaire S1 comporte un circuit principal I comprenant un champ solaire, dont une partie 2.1 forme une zone d'évaporation et une partie 2.2 forme une zone de surchauffe de la vapeur formée, et une zone d'utilisation de la vapeur, par exemple pour produire de l'énergie électrique 6. Un fluide circule dans le circuit principal I qui passe alternativement de l'état liquide à l'état vapeur et de l'état vapeur à l'état liquide. La zone de surchauffe peut ne pas être présente et la vapeur peut être livrée à l'utilisation à l'état saturé. D'autres arrangements des zones 2.1 et 2.2 sont possibles, tels que la configuration dans laquelle les zones 2.1 et 2.2 sont directement connectées supprimant ainsi la recirculation. Ainsi, le système de stockage thermique peut être utilisé pour d'autres configurations de centrales solaires à génération directe de vapeur que celle décrite aux figures 1 et 2.

La centrale solaire comporte également un circuit secondaire II connecté en parallèle avec la zone de production d'énergie électrique 6. Dans l'exemple de centrale solaire représenté qui est celui d'une centrale solaire produisant de la vapeur surchauffée, le circuit secondaire II comporte un module de stockage thermique haute température 10 et le système de stockage de vapeur ST1.

Le champ solaire est par exemple de type cylindro-parabolique, de type centrale à tour, de type Fresnel ou de tout autre type de centrale solaire.

Le zone de surchauffe 2.2 du champ solaire 2 est connectée en sortie à la fois avec la zone de production d'énergie électrique 6 et le circuit secondaire II. La zone de production d'électricité 6 et le circuit secondaire II sont connectés en parallèle.

La zone de production d'énergie électrique 6 et le circuit secondaire II sont connectés en sortie à l'entrée de la zone d'évaporation 2.1 du champ solaire.

La zone de production d'énergie électrique 6 comporte une ou plusieurs turbines 8 et une pompe de circulation 9. Une telle zone est bien connue de l'homme du métier et ne sera pas décrite en détail. La vapeur sortant du champ solaire circule, lorsque cela est requis prioritairement dans la zone de production d'énergie électrique 6. Lorsque le débit de vapeur dépasse le débit nominal de la turbine ou lorsque la demande de production en énergie électrique est plus faible, le débit de vapeur excédant est envoyé dans le circuit secondaire II.

Nous allons maintenant décrire en détail le circuit secondaire II et le système de stockage ST1.

Dans l'exemple représenté, le circuit secondaire II comporte un module de stockage thermique à haute température 10 et le système de stockage ST1 connectés en série. Un circuit secondaire ne comportant pas de module de stockage thermique à haute température ne sort pas du cadre de la présente invention.

Dans la configuration représentée, le module haute température 10 est situé en aval du système de stockage ST1 en considérant la circulation du fluide de la zone de surchauffe 2.2 du champ solaire vers le système de stockage ST1.

Le module haute température 10 est par exemple un dispositif de stockage thermique indirect comportant un échangeur thermique avec un circuit secondaire comportant un réservoir de stockage à sels fondus ou un régénérateur air-matrice solide. En variante, il peut s'agir d'un dispositif à stockage direct dans du béton ou tout autre matériau.

Par exemple, la température d'entrée dans le module de stockage thermique à haute température est comprise entre 300-600°C.

Dans l'exemple représenté, le système de stockage ST1 comporte un module de stockage thermique sous forme de chaleur latente 12, désigné par la suite "module à chaleur latente" et un module de stockage thermique par déplacement de liquide 14, désigné par la suite "module à déplacement de liquide".

Le module à chaleur latente 12 comporte un réservoir 16 contenant un matériau à changement de phase 18 et des canaux 20 traversant le matériau à changement de phase, le fluide circulant dans les canaux pour échanger de la chaleur avec le matériau à changement de phase 20. Le matériau à changement de phase peut être choisi parmi les matériaux à changement de phase connus pour réaliser du stockage thermique. En particulier, il peut être choisi parmi ceux décrits dans l'article *de* Murat M. Kenisarin (« High-temperature phase change materials for thermal energy storage », Renewable and Sustainable Energy Reviews 14 (2010) 955-970*).* En variante, le matériau à changement de phase peut être encapsulé et/ou le module à chaleur latente peut comporter un échangeur qui peut être du type à surface raclée.

En outre, le module à chaleur latente peut contenir à la place du matériau à changement de phase ou en plus du matériau à changement de phase un ou des matériaux à transition d'état solide/solide. Dans la suite de la description, nous prendrons l'exemple d'un module à chaleur latente à matériau à changement de phase.

Le module à chaleur latente 12 comporte un connecteur 24 d'alimentation en vapeur ou d'évacuation de la vapeur, désigné dans la suite de la description "premier connecteur vapeur 24" et un connecteur 26 d'évacuation du liquide ou d'alimentation en liquide, désigné dans la suite de la description "premier connecteur liquide 26". Dans l'exemple représenté, le premier connecteur vapeur 24 est situé dans la partie supérieure et le premier connecteur liquide 26 est situé dans la partie inférieure du réservoir 16, mais ceci n'est en aucun cas limitatif, on peut envisager un réservoir disposé horizontalement. En outre, dans l'exemple représenté, le réservoir 16 présente une forme cylindrique de révolution mais cette forme n'est pas non plus limitative.

En variante, on peut prévoir que le stockage thermique se fasse de manière indirecte, i.e. le matériau à changement de phase peut être disposé dans un réservoir séparé de celui dans lequel le fluide circule et l'échange thermique entre le fluide et le matériau à changement de phase se fait par l'intermédiaire d'un échangeur thermique et d'un circuit secondaire. Cette variante présente l'avantage de permettre de réaliser un réservoir dans lequel circule le fluide et qui est configuré à tenir une pression élevée de taille réduite, puisqu'il ne contient pas le matériau à changement de phase. Le coût de fabrication peut alors être réduit.

Un module de stockage thermique à déplacement de liquide comporte un volume de liquide V et un ciel de vapeur, le volume de liquide V comportant une partie supérieure ZC formée d'un liquide chaud, une partie inférieure ZF formée d'un liquide froid et une région de transition séparant la partie supérieure et la partie inférieure. La région de transition est appelée « thermocline ». Il n'y a pas d'échange thermique au sein du module. En outre il ne contient pas de matériau à changement de phase. Par ailleurs, le stockage se fait par déplacement du liquide à l'intérieur du réservoir tout en gardant un volume constant.

Le module à déplacement de liquide 14 comporte un réservoir 28 contenant un volume de liquide V qui représente une grande partie du volume intérieur du réservoir 28 et une zone supérieure 30 remplie de vapeur et formant un ciel de vapeur. Le rapport entre le volume de liquide V et le volume du ciel de vapeur est de préférence relativement élevé, de l'ordre de 10 à 20 pour minimiser le volume total du réservoir et donc le coût. Le volume de liquide V comporte une zone de liquide chaud ZC en partie supérieure et une zone de liquide froid ZF en partie inférieure. La zone ZC est en contact avec le ciel de vapeur 30. Dans l'exemple représenté, le réservoir 28 a une forme de cylindre de révolution dont l'axe est orienté verticalement mais cette forme n'est en aucun cas limitative.

Le réservoir 28 comporte un connecteur 32 situé dans la zone supérieure 30 du réservoir 28 débouchant dans le ciel de vapeur 30 et destiné à l'alimentation en vapeur ou à l'évacuation de vapeur, celui-ci sera désigné par la suite "deuxième connecteur vapeur", un connecteur 34 dans la zone supérieure 30, relié au premier connecteur vapeur 24 du module à chaleur latente 14, celui-ci sera désigné par la suite "troisième connecteur vapeur", un connecteur 36 débouchant dans la zone de liquide chaude ZC et relié au premier connecteur liquide 26 du module à chaleur latente 12, celui-ci sera désigné par la suite "deuxième connecteur liquide" et un connecteur 38 débouchant dans le fond du réservoir 28 dans la zone de liquide froid ZF, celui-ci sera désigné par la suite "troisième connecteur liquide". Le troisième connecteur liquide 38 est relié par un circuit d'évacuation au circuit d'alimentation de la zone d'évaporation 2.1 du champ solaire 2 via une pompe hydraulique 40 et une vanne de commande 42, qui assure l'évacuation du liquide froid vers le champ solaire en phase de charge. La pompe hydraulique 40 assure le relevage de la pression du liquide à la pression d'entrée du champ solaire.

Le troisième connecteur liquide 38 est également relié par un circuit d'alimentation à la sortie de la zone de production d'énergie électrique 6, le circuit comportant également une vanne de régulation 44. Ce circuit d'alimentation permet l'alimentation du réservoir 28 en liquide froid en phase de décharge.

Le module à chaleur latente 12 est connecté par son premier connecteur liquide 26 au deuxième connecteur liquide 36 du réservoir 28 par un circuit d'évacuation 48 via une deuxième pompe hydraulique 50 et une vanne d'arrêt 52, pour assurer la circulation du liquide du module à chaleur latente 12 vers module à déplacement de liquide 14. Le module à chaleur latente 12 est également connecté par son premier connecteur liquide 26 au deuxième connecteur liquide 36 du réservoir à déplacement de liquide par un circuit d'alimentation 47 muni d'une vanne de régulation 49 pour assurer l'alimentation du module à chaleur latente 12 en phase de décharge.

De préférence, le réservoir 16 du module à chaleur latente 12 présente une hauteur inférieure ou égale à celle du réservoir 28 du module à déplacement de liquide pour permettre d'effectuer la phase de décharge en circulation naturelle. Ainsi le coût lié à l'installation et à la maintenance d'une pompe hydraulique est évité. Un système dans lequel on prévoit une circulation forcée du liquide entre les deux réservoirs en phase de décharge ne sort pas du cadre de la présente invention.

Avantageusement, le réservoir à déplacement de liquide présente un rapport longueur/diamètre suffisant pour réduire le coût du matériau lié à la construction haute pression et à la réduction de la perte thermique, tout en prenant en compte son installation. Le rapport est strictement supérieur à 1, avantageusement compris entre 3 et 15 et plus particulièrement de l'ordre de 10.

Dans l'exemple représenté, est prévue une vanne de régulation 54 en entrée du circuit secondaire II. Cette vanne de régulation 54 peut avantageusement être omise. En effet, l'alimentation en vapeur du circuit secondaire II n'a lieu que lorsqu'il y a de la vapeur en excès, la vanne 54 peut donc être omise. Entre outre, grâce à la connexion entre le module haute température et le module à chaleur latente à travers le module à déplacement de liquide, il y a une équilibre de pression entre les réservoir 16 et 28, ce qui permet de ne pas utiliser des vannes de régulation.

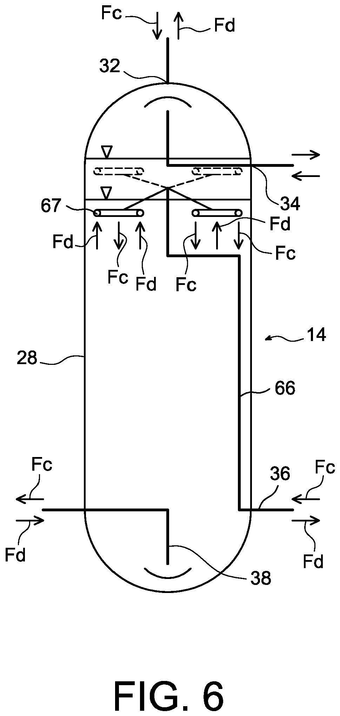

Il sera compris que l'emplacement des connecteurs à travers les réservoirs 16 et 28 n'est pas limitatif. C'est le lieu d'alimentation ou de retrait du fluide qui est à prendre en compte. Par exemple, comme cela sera décrit par la suite sur la figure 6, la connexion entre deux réservoirs peut se faire dans une partie du réservoir et l'injection du fluide peut se faire dans une autre zone à l'intérieur du réservoir.

Le fonctionnement du système de stockage thermique ST1 va maintenant être décrit. Nous considérerons que le circuit secondaire II ne comporte pas la vanne de régulation 54.

Sera décrite tout d'abord une phase de stockage de l'énergie thermique et ensuite sera décrite une phase de déstockage de cette énergie thermique.

Durant la journée, lorsque le débit de vapeur provenant du champ solaire dépasse le débit demandé de la turbine, le débit excédentaire est envoyé dans le circuit secondaire II pour stocker l'énergie thermique en excès. La circulation du fluide se fait suivant les flèches Fc.

Le fluide sous forme vapeur traverse tout d'abord le module haute température 10 dans lequel la température de la vapeur est réduite par échange thermique, mais le fluide est toujours sous forme vapeur. Une partie de l'énergie est stockée dans le module haute température 10 sous forme de chaleur sensible.

La vapeur entre ensuite dans le module à déplacement de liquide 14 au niveau du ciel de vapeur 30 par le deuxième connecteur vapeur 32 avec un certain degré de surchauffe. Lors que la centrale solaire ne comporte pas de zone de surchauffe de la vapeur, la vapeur est en conditions de saturation. En fonction des conditions de température dans le ciel de vapeur 30, la vapeur entrante peut partiellement se condenser jusqu'atteindre les conditions d'équilibre, i.e. la saturation. Le condensat donne lieu à une couche d'eau saturée qui reste stable sur la surface du volume d'eau liquide sur la zone de liquide chaud ZC.

La partie non condensée du débit de fluide sous vapeur entre dans le module à chaleur latente 12 par le premier connecteur vapeur 24 et circule à travers le matériau à changement de phase dans lequel il perd de la chaleur et se condense. Le fluide sous forme liquide s'écoule par gravité vers le fond inférieur du réservoir 16 du module à chaleur latente 12 vers le premier connecteur liquide 26 et est collecté dans le fond inférieur du réservoir 16. La pompe hydraulique 50 est alors activée et la vanne de commande ouverte dans le circuit d'évacuation pour transférer le fluide sous forme liquide vers le deuxième connecteur liquide 36 du réservoir 28 du module à déplacement de liquide. Le fluide liquide est injecté dans la zone de liquide chaud ZC et reste en équilibre grâce à la différence de densité par rapport au liquide plus froid dans la partie basse du réservoir 28. Pendant la phase de charge, la pression du circuit principale est telle qu'elle est supérieure à la pression de saturation correspondante à la température de changement de phase du matériau de changement de phase afin d'établir un gradient de température positif entre le fluide et le matériau à changement de phase et ainsi assurer le transfert de chaleur du fluide vapeur vers le matériau à changement de phase. Le matériau à changement de phase a fondu du fait des échanges thermiques avec la vapeur et stocke l'énergie thermique sous la forme d'énergie latente.

Ainsi une partie de l'énergie thermique est stockée dans le module à chaleur latente 12 sous forme de chaleur latente et une autre partie est stockée dans le module à déplacement de liquide 14 sous forme de chaleur sensible.

Simultanément à l'alimentation du réservoir 28 par le deuxième collecteur liquide 36 en fluide liquide chaud, du fluide liquide froid est évacué par le fond du réservoir 28 via le troisième connecteur liquide 38 et le circuit d'évacuation vers le champ solaire. Le débit de fluide liquide froid évacué est ajusté de sorte à maintenir un niveau constant de liquide dans le réservoir 28. La différence entre le débit massique du fluide liquide à l'entrée et sortie dur réservoir 28 du fait des densités différentes est compensée par exemple au niveau de la bâche d'eau alimentaire ou du dégazeur dans la partie à basse pression du système. Ces éléments sont situés au niveau de la zone de production d'énergie électrique 6.

Le volume de liquide V du module à déplacement de liquide est également désigné comme thermocline, dans le domaine des centrales thermiques solaires. Il existe une stratification thermique dans le volume de liquide V, le liquide chaud situé en partie supérieure ZC et le liquide froid situé en partie inférieure ZF sont séparés par une région de transition appelée « thermocline ». Dans la phase de charge, le thermocline se déplace vers le fond inférieur du réservoir 28.

Dans la phase de charge, la température du fluide liquide froid sortant par le troisième connecteur liquide est sensiblement constante, ce qui minimise les perturbations sur les conditions de fonctionnement du circuit principale du système.

Une phase de déstockage de l'énergie thermique va maintenant être décrite. Le fluide circule alors suivant les flèches Fd.

Cette phase de déstockage peut avoir lieu en l'absence d'ensoleillement, par exemple la nuit ou la journée en présence de nuages ou lorsque que le débit de vapeur produit par le champ solaire n'est plus suffisant pour assurer le débit nécessaire à la turbine.

De manière très avantageuse, le système de stockage ST1 peut à tout moment être mis en condition de restituer l'énergie stockée, et de manière très rapide. Comme mentionné ci-dessus, dés que la pression de vapeur du circuit principal baisse, ce qui correspond à un débit insuffisant en vapeur pour alimenter la turbine à son débit nominal, le système de stockage ST1 commence à produire de la vapeur.

Dans une première phase, du fait de la baisse de pression, la vapeur générée est produite par le flash de la vapeur d'eau saturée du module à déplacement de liquide 14. Cette vapeur est donc générée très rapidement. Cette production de vapeur par le module à déplacement de liquide 14 dès que la pression baisse permet de lisser le passage entre une phase de charge et une phase de décharge. Au contraire, dans les systèmes de l'état de la technique, la vapeur est produite quasi exclusivement par l'étage à chaleur latente, le flash de vapeur du petit volume d'eau présent dans le module à chaleur latente ne jouant pas un rôle significatif dans la compensation de la chute de débit de vapeur, une génération de vapeur suffisante ne débute que pour une baisse de pression de l'ordre de 10 à 20 Bar. Au contraire, selon la présente invention grâce à la production de vapeur par le flash de vapeur dans le module à déplacement de liquide, de la vapeur est produite d'une manière à compenser la diminution de débit sur un intervalle de temps significatif dès que la baisse de pression est de l'ordre de 1 Bar à 2 Bar.

Dans une deuxième phase, lorsque la pression dans circuit principal et de fait dans le circuit secondaire II a suffisamment baissé, la vapeur commence à être produite par le module à chaleur latente 12. Pour cela, le fluide liquide chaud qui est à une température proche de la saturation situé dans la zone ZC du module à chaleur sensible circule du deuxième connecteur liquide 36 vers le premier connecteur liquide 26 par le circuit d'alimentation. Le fluide liquide chaud circule à travers le matériau à changement de phase, ce qui provoque son évaporation. Le débit de fluide liquide chaude provenant du module à chaleur sensible 14 est adapté au débit de vapeur produit dans le module à chaleur latente pour permettre à l'ébullition de se développer sur toute la hauteur du module à chaleur latente 12.

Un mélange eau-vapeur est ainsi produit dans le module à chaleur latente. Ce mélange diphasique est transféré dans la partie supérieure 30 du module à déplacement de liquide, i.e. dans le ciel de vapeur, via le premier connecteur vapeur 24 et le troisième connecteur vapeur 34. La partie haute 30 du module à déplacement de liquide forme alors de manière très avantageuse un séparateur : la phase liquide rejoint la zone de liquide chaud ZC et la vapeur saturée sort du module à déplacement de liquide 14 par le deuxième connecteur vapeur 32, traverse le module haute température 10 dans lequel elle est surchauffée par l'énergie stockée dans ce module et est ensuite envoyée à la turbine.

Grâce à la structure du système de stockage selon l'invention, le séparateur liquide-vapeur est directement intégré au système et ne nécessite donc pas d'éléments et de connexions supplémentaires.

Simultanément au transfert de fluide liquide chaud du module à déplacement de liquide vers le module à chaleur latente, le module à déplacement de liquide est alimenté en fluide liquide froid par le troisième connecteur liquide 38 et le circuit d'alimentation connecté en sortie de la zone de production d'énergie électrique 6. Le débit entrant est adapté pour que le niveau reste sensiblement constant dans le réservoir 28. Dans cette phase, le front de séparation ou "thermocline" entre la partie chaude ZC et la partie froide ZF du fluide liquide dans le réservoir 28 se déplace vers le haut du réservoir.

Le module à déplacement de liquide assure également une fonction tampon par exemple en cas de passages nuageux. Lors d'un appel de puissance au niveau de la turbine, la pression de la vapeur dans le circuit principal chute brutalement. Or, grâce à la capacité du module à déplacement de liquide à produire de la vapeur très rapidement, sans mettre en œuvre le module à chaleur latente, l'effet des situations transitoires, par exemple des passages nuageux, sur la production de vapeur peut être lissé. La durée de vie de la turbine est donc augmentée.

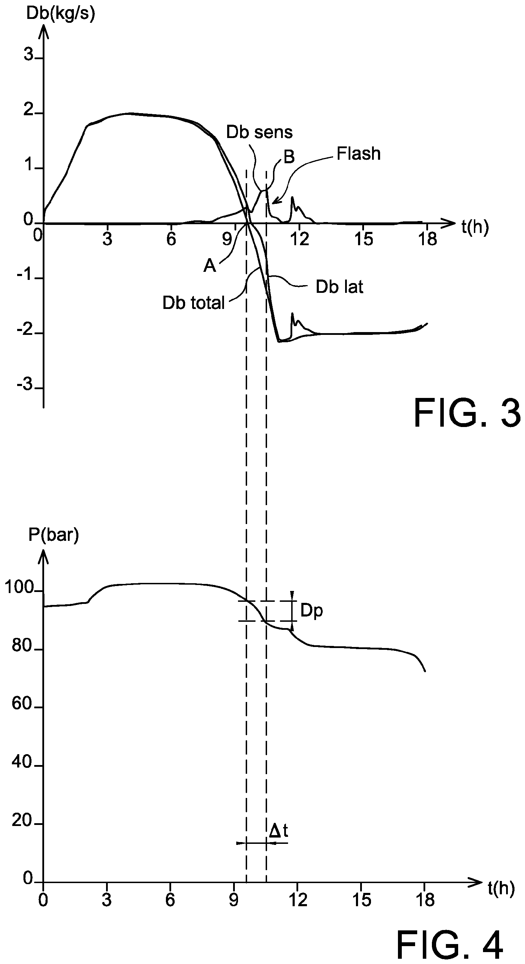

Sur la figure 3, on peut voir représentée graphiquement l'évolution du débit total vapeur en kg/s provenant du système de stockage ST désignée Dbtotal en fonction du temps t en heure, l'évolution du débit vapeur provenant du flash du liquide dans le module à déplacement de liquide désigné Dbsens et l'évolution du débit de vapeur provenant du module à chaleur latente désignée Dblat. La somme du débit vapeur par flash et du débit vapeur provenant du module à chaleur latente est égale au débit total.

On observe que, pendant plusieurs dizaines de minutes, lors du début d'une phase de décharge, la majeure partie du débit de vapeur est formée par le flash de vapeur dans le module à chaleur sensible (zone désignée par "Flash"). Comme expliqué précédemment ce flash assure un effet de lissage entre la phase de charge et de décharge.

Sur la figure 4, on peut voir l'évolution de la pression P en Bar dans le système de stockage en fonction du temps t en heure. On peut observer que la fonction de lissage du flash de vapeur permet de limiter la variation de pression Dp à 3-4 Bar pendant une période Δt d'environ une demi-heure entre le moment de fin production de vapeur dans le champ solaire (point A de la figure 3) et le maximum de débit (point B de figure 3) restitué par le flash du liquide du module à déplacement de liquide.

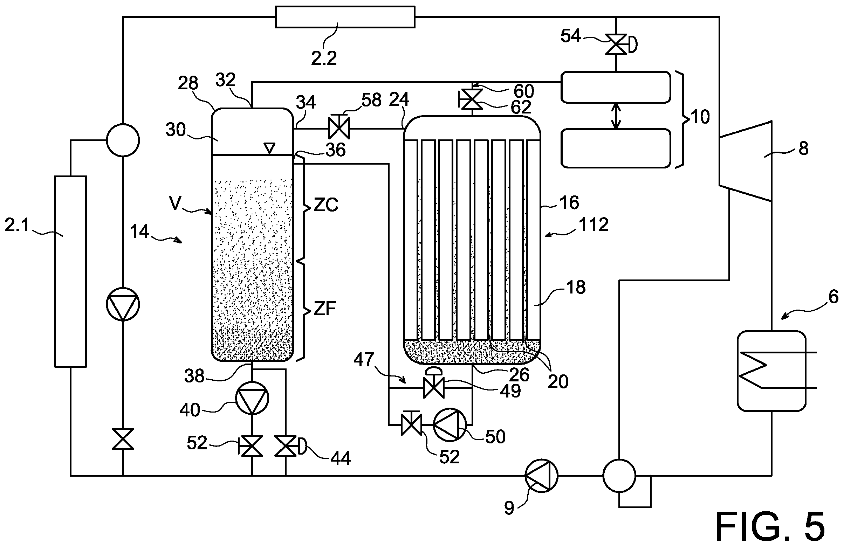

Sur la figure 5, on peut voir un autre exemple de réalisation d'un système de stockage ST2. Les éléments ayant la même fonction et une structure similaire seront désignés par les mêmes références que celles utilisées pour décrire le système ST1.

Dans cet exemple de réalisation, le module à chaleur latente comporte un deuxième connecteur de vapeur 60 situé dans sa partie supérieure et relié directement au module à chaleur latente 112 par une vanne de commande 62, la vanne de commande 56 est située entre la connexion entre le module haute température 10 et le module à déplacement de liquide 12.

Dans cet exemple, le module à déplacement de liquide 14 et le module à chaleur latente 112 ne sont pas à la même pression.

Pendant la phase de charge, les vannes 56 et 58 sont fermées et la vanne 62 est ouverte, la vapeur provenant du champ solaire via le module haute température 10 rentre directement dans le module à chaleur latente 112 pour en sortir en phase liquide par le premier connecteur liquide 26 et ensuite être envoyé dans la zone ZC du module à déplacement de liquide 14.

Pendant la phase de décharge, les vannes 56 et 58 sont ouvertes et la vanne 62 est fermée, le fonctionnement est alors le même que celui du systèmes des figures 1 et 2. Dans cet exemple de réalisation, dans le cas d'un passage nuageux c'est la petite quantité de liquide à l'intérieur du module à chaleur latente qui flashe en premier pour produire de la vapeur avant que les vannes 56, 58 et 62 soient commutées en mode déstockage.

Le module à déplacement de liquide 14, en particulier le volume de liquide V présente un comportement stable dans toutes les conditions de fonctionnement, il peut donc fonctionner sans insert.

De manière avantageuse, un diaphragme de séparation peut être disposé entre la partie chaude ZC et la partie froide ZF du volume de liquide pour réduire les pertes par convection.

De manière très avantageuse, le module à déplacement de liquide comporte des moyens pour assurer l'injection du liquide dans le module à chaleur sensible et du mélange liquide-vapeur provenant du module à chaleur latente, et également son retrait, évitant l'apparition de toute turbulence dans le volume de liquide V afin qu'il reste dans des conditions quasi-stationnaires, excepté le déplacement global qui se fait normalement à des vitesses très faibles, pour éviter un mélange entre la zone ZC et la zone ZF. Par exemple ces moyens sont formés par des dispositifs assurant une bonne répartition de l'écoulement du fluide dans le module à déplacement de liquide 14.

Sur la figure 6, on peut voir représenté schématiquement un module à déplacement de liquide avec des exemples de réalisation de connecteurs liquides et vapeurs dans le module à déplacement de liquide 14.

Le troisième connecteur vapeur 34 traverse latéralement le réservoir 28 et est coudé de sorte à venir injecter ou prélever la vapeur dans une partie haute du ciel de vapeur 30.

Le deuxième connecteur liquide 36 traverse le réservoir 28 dans sa partie inférieure et est connecté à un conduit 66 disposé à l'intérieur du réservoir 28 qui débouche dans la partie haute de la zone ZC juste en-dessous de l'interface avec le ciel de vapeur pour distribuer le liquide chaud par exemple par des distributeurs 67. De manière avantageuse, les distributeurs sont configurés pour flotter sur la surface du volume V à l'interface avec le ciel de vapeur ainsi la distribution de liquide chaud a toujours lieu à l'interface vapeur-liquide dans la partie plus chaude de la zone ZC et évite la création des turbulences par cause des courants de convection naturelle.

Le troisième connecteur liquide 38 ne traverse pas directement le fond du réservoir 28 mais sa paroi latérale et comporte un conduit coudé 68 venant aspirer ou injecter du liquide froid dans le fond réservoir 28.

Le fluide utilisé dans la centrale et apte à se vaporiser et à se condenser est par exemple de l'eau. On peut également utiliser des fluides organiques tels qu'une huile silicone, par exemple le pentafluoropropane connu sous le nom de R245fa ou des métaux liquides, ayant en particulier un bas point d'ébullition (par exemple inférieur à 600°C).

L'invention s'applique à tous les procédés impliquant des fluides qui subit un changement de phase liquide/vapeur et également à tous le matériaux à changement de phase qu'ils ont une température de changement de phase dans la gamme des températures de changement de phase du fluide mis en œuvre dans le procédé. Par ailleurs, comme cela a été mentionné ci-dessus, le matériau à changement de phase pourrait être substitué ou associé par un matériau à transition d'état avec un changement d'état solide/solide.

Grâce à l'invention et plus particulièrement à la mise en œuvre d'un réservoir à chaleur latente et d'un réservoir à déplacement de liquide, on réalise un stockage direct de l'énergie ce qui permet de maximiser le rendement.

En outre, le système de stockage est de réalisation simple et présente un coût de revient réduit par rapport aux systèmes avec un module de stockage à basse température indirect par exemple à sels fondus ou à l'huile.

De plus, le module à déplacement de liquide assure la fonction de tampon, ce qui permet de lisser les états transitoires, tels que les passage nuageux sur plusieurs dizaines des minutes. Dans les systèmes de l'état de la technique, un réservoir tampon additionnel est prévu pour réduire ces transitoires.

Le module à chaleur sensible assure également un lissage du transitoire de pression entre la phase de charge et la phase de décharge puisqu'il assure un génération rapide de vapeur. Ce lissage permet d'améliorer le rendement de restitution de l'énergie.

Le système de stockage thermique peut être utilisé dans d'autres installations qu'une centrale solaire, notamment pour de procédés ou on souhaite découpler ou lisser la production de vapeur de son utilisation, par exemple les systèmes d'incinérations des déchets.

## Revendications

1. Système de stockage thermique de vapeur comportant un module de stockage thermique sous forme de chaleur latente (12) et un module de stockage thermique à déplacement de liquide (14), le module de stockage thermique sous forme de chaleur latente (12) comportant un réservoir (16), le module de stockage thermique à déplacement de liquide (14) comportant un réservoir (28) distinct du réservoir (16) du module de stockage thermique sous forme de chaleur latente (12) contenant un volume de liquide (V) et de la vapeur dans sa partie supérieure (30), le volume de liquide contenu dans le réservoir (28) du module de stockage thermique à déplacement de liquide (14) est constant au cours des phases de stockage et déstockage, **caractérisé en ce que** ledit système comporte des premiers moyens (26, 36) pour transférer du liquide entre une zone supérieure du volume de liquide (V) et le module de stockage thermique sous forme de chaleur latente (12), des deuxièmes moyens (38) pour transférer du liquide entre une zone inférieure du volume de liquide (V) et un premier circuit extérieur, des troisièmes moyens (24, 34) pour transférer de la vapeur ou un mélange liquide-vapeur entre la partie supérieure (30) du réservoir (28) du module de stockage thermique à déplacement de liquide (14) et le module de stockage thermique sous forme de chaleur latente (12), et des quatrièmes moyens (32, 60), pour assurer le transfert de vapeur entre le système et un deuxième circuit extérieur.

2. Système de stockage thermique selon la revendication 1, dans lequel les quatrièmes moyens (32) pour assurer le transfert de vapeur ente ledit système et un circuit extérieur sont formés par une connexion (32) débouchant uniquement dans la partie supérieure (30) du module de stockage thermique à déplacement de liquide (14).

3. Système de stockage thermique selon la revendication 1, dans lequel les quatrièmes moyens (60) pour assurer le transfert de vapeur entre le système et un circuit extérieur sont formés par une connexion (60) d'alimentation en vapeur débouchant dans le module de stockage thermique sous forme de chaleur latente (12) et une connexion d'évacuation de la vapeur prélevant la vapeur dans la partie supérieure (30) du module de stockage thermique à déplacement de liquide (14).

4. Système de stockage thermique selon la revendication 3, dans lequel les troisièmes moyens (24, 34) pour transférer de la vapeur ou un mélange liquide-vapeur entre la partie supérieure du réservoir (28) du module de stockage thermique à déplacement de liquide (14) et le module de stockage thermique sous forme de chaleur latente (12) comportent une première vanne de commande (58) pour interrompre la communication entre lesdits modules (12, 14).

5. Système de stockage thermique selon l'une des revendication 1 à 4, dans lequel le module de stockage thermique sous forme de chaleur latente (12) comporte au moins un matériau à transition d'état solide/solide et des moyens d'échange thermique entre ledit matériau et le fluide traversant le module de stockage thermique sous forme de chaleur latente (12) et /ou dans lequel le module de stockage thermique sous forme de chaleur latente (12) comporte au moins un matériau à changement de phase (18) et des moyens d'échange thermique entre ledit matériau et le fluide traversant le module de stockage thermique sous forme de chaleur latente (12).

6. Système de stockage thermique selon la revendication 5, dans lequel le module de stockage thermique sous forme de chaleur latente (12) comporte un premier réservoir contenant ledit matériau à changement de phase et/ou ledit matériau à transition d'état solide/solide, un deuxième réservoir distinct du premier réservoir pour l'écoulement du fluide et les moyens d'échange thermique entre le premier et le deuxième réservoir.

7. Système de stockage thermique selon l'une des revendication 1 à 6, dans lequel les premiers moyens (26, 34) pour transférer du liquide entre une zone supérieure (ZC) du volume de liquide (V) et le module de stockage thermique sous forme de chaleur latente (12) comportent une pompe hydraulique (50) pour transférer le liquide du module de stockage thermique sous forme de chaleur latente (12) vers le module de stockage thermique à déplacement de liquide (14).

8. Système de stockage thermique selon l'une des revendication 1 à 7, dans lequel la hauteur du réservoir (16) du module de stockage thermique sous forme de chaleur latente (12) est inférieure ou égale à celle du réservoir (28) du module de stockage thermique à déplacement de liquide (14).

9. Système de stockage thermique selon l'une des revendication 1 à 8, comportant une membrane flottante séparant une zone de liquide à une première température supérieure d'une zone de liquide à une deuxième température, la première température étant supérieure à la deuxième température.

10. Système de stockage thermique selon l'une des revendication 1 à 9, dans lequel les premiers moyens (26, 36) pour transférer du liquide entre une zone supérieure (ZC) du volume de liquide (V) et le module de stockage thermique sous forme de chaleur latente (12) comportent un distributeur pour injecter ou prélever le liquide dans le module de stockage thermique à déplacement de liquide de sorte à réduire les turbulences dans le volume de liquide.

11. Centrale solaire à génération directe de vapeur comportant un circuit principal comprenant un champ solaire (2.1, 2.2) de production de vapeur et une zone d'utilisation de la vapeur (6) connectés en série et un circuit secondaire connecté au champ solaire de sorte à être alimenté par le champ solaire (2.1, 2.2) avec au moins une fraction du débit de vapeur et à alimenter le champ solaire (2.1, 2.2) en liquide, ledit circuit secondaire comportant un système de stockage selon l'une des revendications 1 à 10, les deuxièmes moyens de transfert (38) étant connectés avec l'entrée du champ solaire (2.1, 2.2) et avec la sortie de la zone d'utilisation (6) de la vapeur et les quatrièmes moyens (32, 60) connectant le système de stockage thermique avec la sortie du champ solaire, la zone d'utilisation de la vapeur (6) étant avantageusement une zone de production d'électricité.

12. Centrale solaire selon la revendication 11 en combinaison avec la revendication 4, comportant une deuxième vanne de commande (62) entre la sortie du champ solaire et le module de stockage thermique sous forme de chaleur latente (12), lorsque la première vanne de commande (58) est dans un état d'ouverture ou de fermeture, la deuxième vanne est dans un état de fermeture ou d'ouverture respectivement.

13. Centrale solaire selon la revendication 11 ou 12, comportant un module de stockage thermique à haute température (10) sous forme de chaleur sensible disposé entre la sortie du champ solaire et le système de stockage.

14. Centrale solaire selon l'une des revendications 11 à 13, dans laquelle les deuxièmes moyens de transfert (38) comportent une pompe hydraulique (40) pour transférer le liquide du module de stockage à déplacement de liquide (14) vers le champ solaire (2.1, 2.2) à une pression donnée.

15. Centrale solaire selon l'une des revendications 11 à 14 en combinaison avec la revendication 13, dans laquelle le module de stockage thermique haute température (10) et le système de stockage thermique se chargent en énergie thermique tant que la pression de vapeur produite par le champ solaire (2.1, 2.2) est supérieure ou égale à une valeur de pression donnée et dans laquelle le système de stockage thermique produit de la vapeur automatiquement dès que la pression de vapeur produite par le champ solaire (2.1, 2.2) est inférieure ou égale à une valeur donnée, la pression donnée étant avantageusement la pression nominale de fonctionnement d'une turbine de la zone d'utilisation de la vapeur.

## Patentansprüche

1. Dampwärmerspeichersystem mit einem Latentwärmespeichermodul (12) und einem Flüssigkeitsbewegungs-Wärmespeichermodul (14), wobei das Latentwärmespeichermodul (12) ein Reservoir (16) aufweist, das Flüssigkeitsbewegungs-Wärmespeichermodul (14) ein von dem Reservoir (16) des Latentwärmespeichermoduls (12) separat vorliegendes Reservoir (28) aufweist, das in seinem oberen Teil (30) ein Flüssigkeitsvolumen (V) und Dampf enthält, wobei das in dem Reservoir (28) des Flüssigkeitsbewegungs-Wärmespeichermoduls (14) enthaltene Flüssigkeitsvolumen während der Phasen der Speicherung und Entnahme konstant ist,
**dadurch gekennzeichnet, dass**
das System erste Mittel (26, 36) zum Überführen von Flüssigkeit zwischen einem oberen Bereich des Flüssigkeitsvolumens (V) und dem Latentwärmespeichermodul (12), zweite Mittel (38) zum Überführen von Flüssigkeit zwischen einem unteren Bereich des Flüssigkeitsvolumens (V) und einem ersten externen Kreislauf, dritte Mittel (24, 34) zum Überführen von Dampf oder von einem Flüssigkeit-Dampf-Gemisch zwischen dem oberen Teil (30) des Reservoirs (28) des Flüssigkeits-Bewegungs-Wärmespeichermoduls (14) und dem Latentwärmespeichermodul (12), und vierte Mittel (32, 60) zum Überführen von Dampf zwischen dem System und einem zweiten externen Kreislauf aufweist.

2. Wärmespeichersystem nach Anspruch 1,
wobei die vierten Mittel (32) zum Überführen von Dampf zwischen diesem System und einem externen Kreislauf aus einer Verbindung (32) gebildet sind, die nur in den oberen Teil (30) des Flüssigkeitsbewegung-Wärmespeichermoduls (14) mündet.

3. Wärmespeichersystem nach Anspruch 1,
wobei die vierten Mittel (60) zum Überführen von Dampf zwischen dem System und einem externen Kreislauf aus einer Dampfzuführverbindung (60), die in das Latentwärmespeichermodul (12) mündet, und einer Dampfableitverbindung gebildet sind, die den Dampf aus dem oberen Teil (30) des Flüssigkeitsbewegungs-Wärmespeichermoduls (14) entnimmt.

4. Wärmespeichersystem nach Anspruch 3,
wobei die dritten Mittel (24, 34) zum Überführen von Dampf oder von einem Flüssigkeit-Dampf-Gemisch zwischen dem oberen Teil des Reservoirs (28) des Flüssigkeitsbewegungs-Wärmespeichermoduls (14) und dem Latentwärmespeichermodul (12) ein erstes Steuerventil (58) zum Unterbrechen der Verbindung zwischen den Modulen (12, 14) aufweisen.

5. Wärmespeichersystem nach einem der Ansprüche 1 bis 4,
wobei das Latentwärmespeichermodul (12) mindestens ein Festkörper/Festkörper-Übergangsmaterial und Mittel zum Wärmeaustausch zwischen dem Material und dem Fluid, das durch das Latentwärmespeichermodul (12) fließt, aufweist, und/oder
wobei das Latentwärmespeichermodul (12) mindestens ein Phasenwechselmaterial (18) und Mittel zum Wärmeaustausch zwischen dem Material und dem Fluid, das durch das Latentwärmespeichermodul (12) fließt, aufweist.

6. Wärmespeichersystem nach Anspruch 5,
wobei das Latentwärmespeichermodul (12) ein erstes Reservoir, das das Phasenwechselmaterial und/oder das Festkörper/Festkörper-Übergangsmaterial enthält, ein von dem ersten Reservoir separat vorliegendes zweites Reservoir für die Strömung des Fluids und Mittel zum Wärmeaustausch zwischen dem ersten und dem zweiten Reservoir aufweist.

7. Wärmespeichersystem nach einem der Ansprüche 1 bis 6,
wobei die ersten Mittel (26, 34) zum Überführen von Flüssigkeit zwischen einem oberen Bereich (ZC) des Flüssigkeitsvolumens (V) und dem Latentwärmespeichermodul (12) eine Hydraulikpumpe (50) zum Überführen von Flüssigkeit von dem Latentwärmespeichermodul (12) zu dem Flüssigkeitsbewegungs-Wärmespeichermodul (14) aufweisen.

8. Wärmespeichersystem nach einem der Ansprüche 1 bis 7,
wobei die Höhe des Reservoirs (16) des Latentwärmespeichermoduls (12) kleiner oder gleich der des Reservoirs (28) des Flüssigkeitsbewegungs-Wärmespeichermoduls (14) ist.

9. Wärmespeichersystem nach einem der Ansprüche 1 bis 8,
enthaltend eine schwimmende Membran, die einen Flüssigkeitsbereich mit einer ersten, höheren Temperatur von einem Flüssigkeitsbereich mit einer zweiten Temperatur trennt, wobei die erste Temperatur höher als die zweite Temperatur ist.

10. Wärmespeichersystem nach einem der Ansprüche 1 bis 9,
wobei die ersten Mittel (26, 36) zum Überführen von Flüssigkeit zwischen einem oberen Bereich (ZC) des Flüssigkeitsvolumens (V) und dem Latentwärmespeichermodul (12) einen Verteiler zum Einspritzen bzw. Entnehmen von Flüssigkeit in das bzw. aus dem Flüssigkeitsbewegungs-Wärmespeichermodul enthalten, um so Turbulenzen im Flüssigkeitsvolumen zu reduzieren.

11. Solarkraftwerk mit direkter Dampferzeugung, enthaltend einen Hauptkreislauf, der ein dampferzeugendes Solarfeld (2.1, 2.2) und einen Dampfnutzungsbereich (6) enthält, die in Reihe geschaltet sind, und einen Sekundärkreislauf, der mit dem Solarfeld verbunden ist, um über das Solarfeld (2.1, 2.2) mit mindestens einem Teil des Dampfdurchsatzes versorgt zu werden und das Solarfeld (2.1, 2.2) mit Flüssigkeit zu versorgen, wobei der Sekundärkreislauf ein Speichersystem nach einem der Ansprüche 1 bis 10 enthält,
wobei die zweiten Überführungsmittel (38) mit dem Einlass des Solarfeldes (2.1, 2.2) und mit dem Auslass des Dampfnutzungsbereichs (6) verbunden sind und die vierten Mittel (32, 60) das Wärmespeichersystem mit dem Auslass des Solarfeldes verbinden, wobei der Dampfnutzungsbereich (6) vorteilhaft ein Stromerzeugungsbereich ist.

12. Solarkraftwerk nach Anspruch 11 in Kombination mit Anspruch 4, enthaltend ein zweites Steuerventil (62) zwischen dem Auslass des Solarfelds und dem Latentwärmespeichermodul (12), wobei dann, wenn das erste Steuerventil (58) in einem offenen bzw. geschlossenen Zustand ist, das zweite Ventil in einem geschlossenen bzw. offenen Zustand ist.

13. Solarkraftwerk nach Anspruch 11 oder 12, enthaltend ein Wärmespeichermodul (10) für Hochtemperatur in Form von fühlbarer Wärme, das zwischen dem Auslass des Solarfeldes und dem Speichersystem angeordnet ist.

14. Solarkraftwerk nach einem der Ansprüche 11 bis 13,
wobei die zweiten Überführungsmittel (38) eine Hydraulikpumpe (40) zum Überführen von Flüssigkeit von dem Flüssigkeitsbewegungs-Speichermodul (14) zu dem Solarfeld (2.1, 2.2) bei einem gegebenen Druck enthalten.

15. Solarkraftwerk nach einem der Ansprüche 11 bis 14 in Kombination mit Anspruch 13,
wobei der Hochtemperatur-Wärmespeicher (10) und das Wärmespeichersystem mit Wärmeenergie geladen werden, solange der vom Solarfeld (2.1, 2.2) erzeugte Dampfdruck höher oder gleich einem vorgegebenen Druckwert ist, und wobei das Wärmespeichersystem automatisch Dampf erzeugt, sobald der vom Solarfeld (2.1, 2.2) erzeugte Dampfdruck niedriger oder gleich einem vorgegebenen Wert ist,
wobei der vorgegebene Druck vorteilhaft der Nennbetriebsdruck einer Turbine im Dampfnutzungsbereich ist.

## Claims

1. Steam thermal storage system comprising a latent heat thermal storage module (12) and a liquid displacement thermal storage module (14), the latent heat thermal storage module (12) comprising a reservoir (12), the liquid displacement thermal storage module (14) comprising a reservoir (28) different from the reservoir (16) in the latent heat thermal storage module (12) containing a volume of liquid (V) and steam in its upper part (30), the volume of the liquid contained in the reservoir (28) of the liquid displacement thermal storage module (14) is constant during charge and discharge phases, **characterized in that** said system comprises first means (26, 36) of transferring liquid between an upper zone in the liquid volume (V) and the latent heat thermal storage module (12), second means (38) of transferring liquid between a lower zone in the liquid volume (V) and a first external circuit, third means (24, 34) for transferring steam or a liquid-steam mix between the upper part (30) of the reservoir (28) in the liquid displacement thermal storage module (14) and the latent heat thermal storage module (12), and fourth means (32, 60), for transferring steam between the system and a second external circuit.

2. Thermal storage system according to claim 1, in which the fourth means (32) for transferring steam between said system and an external circuit are formed by a connection (32) opening up only in the upper part (30) of the liquid displacement thermal storage module (14).

3. Thermal storage system according to claim 1, in which the fourth means (60) of transferring steam between the system and an external circuit are formed by a steam supply connection (60) opening up into the latent heat thermal storage module (12) and a steam evacuation connection that draws off steam from the upper part (30) of the liquid displacement thermal storage module (14).

4. Thermal storage system according to claim 3, in which the third means (24, 34) for transferring steam or a liquid-steam mix between the upper part of the reservoir (28) in the liquid displacement thermal storage module (14) and the latent heat thermal storage module (12) comprise a first control valve (58) to interrupt communication between said modules (12, 14).

5. Thermal storage system according to one of claims 1 to 4, in which the latent heat thermal storage module (12) comprises at least one solid/solid state transition material and means of heat exchange between said material and the fluid passing through the latent heat thermal storage module (12), and/or in which the latent heat thermal storage module (12) comprises at least one phase change material (18) and heat exchange means between said material and the fluid passing through the latent heat thermal storage module (12).

6. Thermal storage system according to claim 5, in which the latent heat thermal storage module (12) comprises a first reservoir containing said phase change material and/or said solid/solid state transition material, a second reservoir distinct from the first reservoir for the fluid flow and heat exchange means between the first reservoir and the second reservoir.

7. Thermal storage system according to one of claims 1 to 6, in which the first means (26, 34) of transferring liquid between an upper zone (ZC) of the liquid volume (V) and the latent heat thermal storage module (12) comprise a hydraulic pump (50) for transferring liquid from the latent heat thermal storage module (12) to the liquid displacement thermal storage module (14).

8. Thermal storage system according to one of claims 1 to 7, in which the height of the reservoir (16) of the latent heat thermal storage module (12) is less than or equal to the height of the reservoir (28) in the liquid displacement thermal storage module (14).

9. Thermal storage system according to one of claims 1 to 8, comprising a floating membrane separating a liquid zone at a first high temperature from a liquid zone at a second temperature, the first temperature being higher than the second temperature.

10. Thermal storage system according to one of claims 1 to 9 in which the first means (26, 36) for transferring liquid between an upper zone (ZC) of the liquid volume (V) and the latent heat thermal storage module (12) comprise a distributor to inject or draw off liquid in or from the liquid displacement thermal storage module so as to reduce turbulence in the liquid volume.

11. Direct steam generation solar plant comprising a main circuit including a solar field (2.1, 2.2) for the production of steam and a zone using steam (6) connected in series and a secondary circuit connected to the solar field so that it can be supplied by the solar field (2.1, 2.2) with at least a fraction of the steam flow and supply the solar field (2.1, 2.2) with liquid, said secondary circuit comprising a storage system according to one of claims 1 to 10, the second transfer means (38) being connected with the input to the solar field (2.1, 2.2) and with the output of the zone using steam (6) and the fourth means (32, 60) connecting the thermal storage system with the outlet of the solar field, the zone using steam (6) being advantageously an electricity generation zone.

12. Solar plant according to claim 11 combined with claim 4, comprising a second control valve (62) between the outlet of the solar field and the latent heat thermal storage module (12), when the first control valve (58) is in an open state or a closed state, the second valve is in a closed state or open state respectively.

13. Solar plant according to claim 11 or 12, comprising a high temperature sensible heat thermal storage module (10) placed between the outlet of the solar field and the storage system.

14. Solar plant according to one of claims 11 to 13, in which the second transfer means (38) comprise a hydraulic pump (40) for transferring liquid from the liquid displacement storage module (14) to the solar field (2.1, 2.2) at a given pressure.

15. Solar plant according to one of claims 11 to 14 combined with claim 14, in which the high temperature thermal storage module (10) and the thermal storage system are charged with thermal energy as long as the steam pressure produced by the solar field (2.1, 2.2) is greater than or equal to a given pressure and in which the thermal storage system produces steam automatically as soon as the steam pressure generated by the solar field (2.1, 2.2) is less than or equal to a given value, in which the given pressure being advantageously the nominal operating pressure of a turbine in the zone using steam.
